# EUROPEAN PATENT APPLICATION

(11) **EP 4 664 244 A1**
(43) Date of publication of application: **17.12.2025**
(21) Application number: 24181875.6
(22) Date of filing: 13.06.2024
(51) Int. Cl.: G06F 3/01, G06V 20/52, G06Q 30/0201, G06Q 30/0251, G06Q 30/02, G06Q 30/06, G06Q 30/0601, G06T 7/70, G06V 10/25, G06V 40/00

(54) **DETERMINING A GAZE LOCATION OF A HUMAN INTERACTING WITH PRODUCTS IN A STORE**

(71) Applicant: Auki Matterless Limited, Hong Kong (HK)
(72) Inventor: SHAW, Phil, Hong Kong (HK); PIHL, Nils, Hong Kong (HK); LIU, Tracy, Portocolom (ES)
(74) Representative: Zacco Sweden AB

(57) **Abstract**

The present invention relates to a computer implemented method for determining a gaze location of a human interacting with products in a store environment. The method comprising: obtaining, from a camera monitoring at least a portion of the store environment, one or more images of human interaction with products in the store environment, the camera having a known position and orientation within a coordinate system of the store environment; determining a position and orientation of a head of the human in the coordinate system of the store environment by analyzing the one or more images; and determining the gaze location of the human as an intersection between a raycast from a position and orientation of the head of the human in a virtual representation of the store environment corresponding to the position and orientation of the head of the human in the coordinate system of the store environment and a virtual structure in the virtual representation of the store environment.

## Description

### Technical field

The present invention relates to determining a gaze location of a human interacting with products in a store environment.

### Background

Human behavior in a store while buying products involves a series of actions, decisions, and social interactions driven by various factors such as needs, preferences, budget, and environmental cues.

Upon entering the store individuals often grab a shopping cart or basket based on the volume of groceries they intend to purchase. Many shoppers consult a grocery list, either on paper or their phone, to guide their purchases. Some, however, prefer to shop spontaneously. Stores are typically designed so that shoppers are to follow a route through the store. Recurring shoppers typically have a specific path they follow every time. While shopping customers scan shelves for desired items, compare prices, brands, and labels. This might involve picking up products to examine them more closely. Eye-catching displays and promotions can lead to unplanned purchases. Items placed at eye level or at the end of aisles are particularly influential. Customers with dietary restrictions or preferences (e.g., vegan, gluten-free) spend more time reading labels and may visit specific sections dedicated to their needs. Some customers are loyal to certain brands, while others are price-sensitive and opt for cheaper or discounted items. The decision often involves a trade-off between quality and price. Freshness of produce, expiry dates, and ingredient quality are key factors. For staple items, shoppers might buy in bulk to save money or for convenience, especially if there are special offers. When shopping with family, decisions are often discussed. Parents might negotiate with children over snack choices, or partners may split the list to save time. Customers navigate around each other, sometimes engaging in brief social interactions such as asking for help or excusing themselves. Alternatively, or in combination, they may seek assistance from store employees for locating items, getting product recommendations, or addressing issues like price discrepancies.

Store design, including the placement of essential and impulse items, influences shopping behavior. Moreover, discounts, loyalty programs, and special deals play a significant role in shaping purchasing decisions. After leaving the store, some customers reflect on their purchases, satisfaction with the shopping experience, and whether they stayed within budget. Overall, shopping is a complex activity influenced by individual needs, preferences, social factors, and the store environment.

Hence, there is a need in providing retailers with new technology for improving the shopping experience for the customers.

### Summary of the invention

In view of the above, it is an object of the present invention to provide retailers with new technology for improving the shopping experience for the customers. This may be made by the presented technology for tracking how customers are interacting with products in the store. The information gained may be used for adjusting and/or keeping track of store layouts. Further, the information gained may be used for guiding store employees to help customers and/or to present targeted information to the customers. This new technology being easy to implement without the need of costly hardware installations.

According to a first aspect a computer implemented method for determining a gaze location of a human interacting with products in a store environment is provided. The method comprising: obtaining, from a camera monitoring at least a portion of the store environment, one or more images of human interaction with products in the store environment, the camera having a known position and orientation within a coordinate system of the store environment; determining a position and orientation of a head of the human in the coordinate system of the store environment by analyzing the one or more images; and determining the gaze location of the human as an intersection between a raycast from a position and orientation of the head of the human in a virtual representation of the store environment corresponding to the position and orientation of the head of the human in the coordinate system of the store environment and a virtual structure in the virtual representation of the store environment.

By raycasting within the virtual representation, the image data is not needed to be analysed during the actual raycasting. Instead, the information needed is a pose (i.e. position and orientation of the head within the virtual representation and the virtual representation itself. Hence, computer hardware requirements and processing time may be greatly reduced. This also helps preserve privacy as images are not being distributed for processing. Further, the virtual representation is stable, it won't be affected by transient events picked up by the camera in vision-based solutions. Further, typically gaze estimation requires a camera with a clear sight of the user's eyes. In a store environment this would equate to an impractical number of cameras due to the cost and installation requirements. The present invention requires less hardware as it can cover a greater area per image source, and is less obtrusive, meaning it is easier to deploy and less likely to make customers uncomfortable

The virtual structure in the virtual representation of the store environment may be a planogram representing a structure for exposing goods in the store environment.

Different positions within the planogram may represent locations for different types of products on the structure for exposing goods in the store environment. The method may further comprise determining a type of product the human is interacting with by determining a position within the planogram overlapping with the gaze location of the human.

The method may further comprise privacy masking facial features of the human in the obtained one or more images.

The obtained one or more images may be depicting the human from behind or from the side in a manner so that eye features of the human are not present in the one or more images.

Analyzing the one or more images in order to determine the position and orientation of the head of the human in the coordinate system of the store may comprise: determining a scale-invariant coordinate system of the human using keypoints of the human determined using a pose estimation algorithm run on the one or more images; and determining a conversion factor from the scale-invariant coordinate system of the human to the coordinate system of the store environment by determining a distance in the coordinate system of the store environment between two keypoints of the human.

Determining a distance in the coordinate system of the store environment between two keypoints of the human may comprise determining a respective position in the coordinate system of the store environment for each of the feet of the human by raycasting from the known position and orientation of the camera to a respective position on a floor of the store environment at which a respective foot of the human is located.

The method may further comprise determining a time period during which the human is interacting with a specific product. Upon the time period during which the human is interacting with a specific product exceeds a first threshold, the method may comprise generating an information presentation event to be presented to the human. Additionally, or in combination, upon the time period during which the human is interacting with a specific product exceeds a second threshold, the method may comprise generating an alert message informing a store employee to seek up the human within the store environment, wherein the alert message comprises a location of the human within the coordinate system of the store environment.

The method may further comprise generating an entry in a heat map of human interactions with products in a store based on the determined type of product the human is interacting with. The entry in the heat map may be based on the time period during which the human is interacting with the type of product. The method may be repeated such that further entries in the heat map of human interactions with products in a store is generated.

According to a second aspect a non-transitory computer-readable storage medium is provided. The non-transitory computer-readable storage medium having stored thereon instructions for implementing the method according to the first aspect when executed on a device having processing capabilities.

The above-mentioned features of the method according to the first aspect, when applicable, apply to this second aspect as well. In order to avoid undue repetition, reference is made to the above.

According to a second aspect a local server is provided. The local server comprising a memory having stored thereon instructions for implementing the method according to the first aspect; and a processing circuitry configured to execute the instructions.

The above-mentioned features of the method according to the first aspect, when applicable, apply to this third aspect as well. In order to avoid undue repetition, reference is made to the above.

A further scope of applicability will become apparent from the detailed description given below. However, it should be understood that the detailed description and specific examples are given by way of illustration only.

It is to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects will now be described in more detail, with reference to appended figures. The figures should not be considered limiting; instead they are used for explaining and understanding.

As illustrated in the figures, the sizes of layers and regions may be exaggerated for illustrative purposes and, thus, are provided to illustrate the general structures. Like reference numerals refer to like elements throughout.
Fig. 1 illustrates a schematic top view of a real space in the form of a store environment.
Fig. 2 illustrates a virtual representation of the store environment in Fig. 1.
Fig. 3 illustrates a system of devices used to perform the method discussed in connection with Fig. 4.
Fig. 4a is a block diagram of a method for determining a gaze location of a human interacting with products in a store environment, e.g. the store environment of Fig. 1.
Fig. 4b is a continuation of the block diagram of the method for determining a gaze location of a human interacting with products in a store environment started in Fig. 4a.

### Detailed description

The present invention will now be described more fully hereinafter with reference to the accompanying drawings, in which currently preferred embodiments of the invention are shown. This invention may, however, be embodied in many different forms.

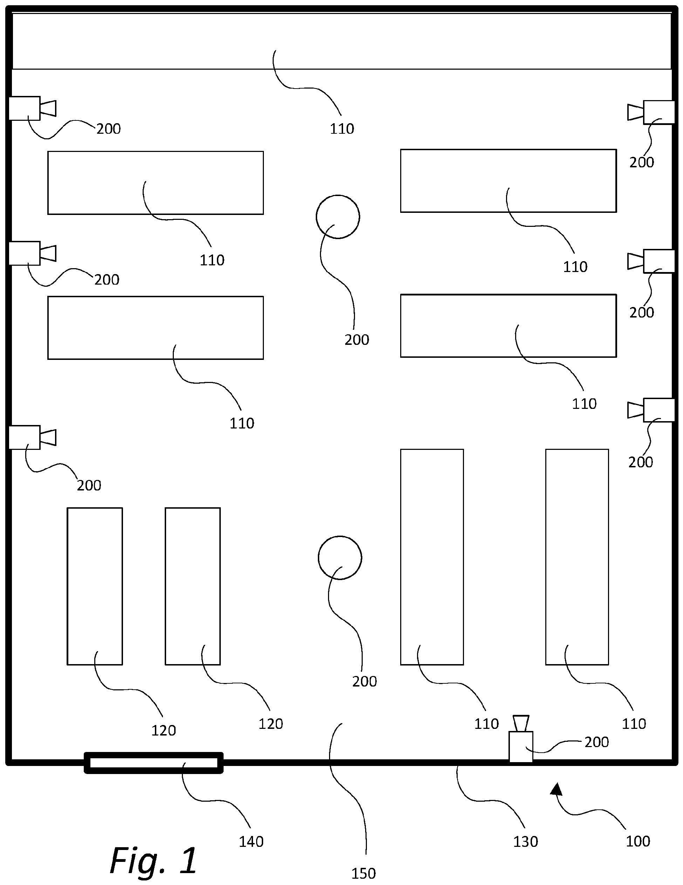

Fig. 1 illustrates a schematic top view of a real space in the form of a store environment 100. In the store environment 100 there is a number of structures 110 for exposing products offered for sale in the store 100. Non-liming examples of structures 110 for exposing products are gondola shelving, end cap displays, produce bins and tables for fresh fruits and vegetables, refrigerated display cases, stacked pallets, specialty displays, bulk bins, hanging displays, and floor stacking. Gondola shelving is one of the most common types of shelving in grocery stores. Gondola shelves are freestanding units that can be double-sided or single-sided, allowing for flexibility in aisle layout. They are adjustable and versatile for displaying a wide range of products. End cap displays are shelves at the end of aisles. These spaces are often used for promotional displays, featuring new products, or showcasing items on sale. End cap displays attract attention and encourage impulse purchases. Produce bins and tables for fresh fruits and vegetables may also be seen as shelves for displaying products in the store. Produce bins and tables for fresh fruits and vegetables allow customers to easily view and select items. This creates a market-like atmosphere and enhances the visibility of the produce. Refrigerated display cases are used to display perishable items such as dairy products, meat, and deli items on different shelves in the display cases. These display cases can be open or enclosed and are designed to maintain the freshness of temperature-sensitive products. Stacked Pallets of goods, especially non-perishable items or promotional products, may be stacked in strategic locations throughout the store. This technique is common for bulk or seasonal items. Specialty displays may be created for certain products, such as seasonal items, ethnic foods, or specialty ingredients. These displays are often themed and designed to attract customers interested in specific categories. Aisle shelving units along the aisles are used to organize a variety of products. Bulk bins are commonly used for items like grains, nuts, and candies. Customers can use scoops to select the desired quantity, and this approach is often more cost-effective for both the store and the customer. Hanging displays, such as clip strips or hanging racks, are often used for small or impulse-buy items like snacks, candies, or travel-sized products. Floor stacking may be used to stack certain products directly on the floor to create eye-catching displays. This is often done with promotional or bulk items. These structures are often used in combination to create an engaging and organized shopping environment. The goal is to optimize product visibility, accessibility, and appeal to enhance the overall shopping experience for customers.

In connection with the structures 110 for exposing goods in the store environment 100 each such structure 110 comprises a plurality of shelf edge labels. These are labels placed on the edge of structure, typically below the product. Each label typically contains the product name, price, and sometimes additional information like weight or unit price. Each label also comprises a data-encoded marker. The shelf edge labels may be printed labels. Alternatively, the shelf edge labels may be small digital displays, typically having a display based on e-ink.

In addition to structures 110 for exposing products, the store environment 100 may comprise other structures, such as check-out counters 120, walls, 130, doors 140 and/or a floor 150.

Further, the store environment 100 comprises one or more cameras 200. Below an example of a camera 200 among the one or more cameras 200 will be discussed. It is realized that all of the one or more cameras 200 may have the same functionality as the below discussed camera 200. The camera 200 is monitoring at least a portion of the store environment 100. The camera 200 is stationary arranged in the store environment 100, i.e. a position for the camera 200 within the store environment 100 is known. The camera 200 may be a camera having Pan-Tilt-Zoom, PTZ, functionality. Alternatively, or combination, the camera 200 may be a dome camera having a 360° view. The camera 200 is configured to capture images depicting the portion of the store environment 100 the camera 200 is set to monitor. The captured images may be in the form of still images or one or more video sequences. The camera 200 is further connected to a network such that images captured by the camera 200 may be sent to other devices, e.g. servers, over the network. The network is typically a local network, being local for the store. However, the network may be part of a global network as well. As mentioned above, the positions of each of the one or more cameras 200 within the store environment 100 is known. Hence, each camera 200 has a known position within a coordinate system of the store environment 100. Further, since Pan-Tilt values and/or intrinsic parameters of the camera 200 is known upon the camera is capturing an image, also the orientation of the camera 200 in the coordinate system of the store environment 100 is known upon the camera 200 is capturing an image. Internal parameters of the camera that define how it captures and projects the 3D world onto a 2D image plane may be determined in connection with capturing of an image. These intrinsic parameters may be used for understanding and modelling the geometry of the camera 200. These intrinsic parameters are usable for various computer vision tasks, such as 3D reconstruction, image rectification, and augmented reality. An example of an intrinsic parameter is the focal length. The focal length is a distance between the lens of the camera 200 and an image sensor of the camera 200 when the lens is focused on an object at infinity. The focal length determines the magnification of the image. Focal length is typically expressed in pixels and affects the field of view of the camera. Another example of an intrinsic parameter is the principal point. The principal point is the point on the image sensor where the optical axis of the lens intersects the image plane. It is usually close to the center of the image. Another example of an intrinsic parameter is the skew coefficient. The skew coefficient describes an angle between the x and y pixel axes. In most modern cameras, this angle is 90 degrees, so the skew is usually zero. However, it can be non-zero if the pixels are not perfectly rectangular of if the camera 200 is a 360° dome camera.

Further, in the coordinate system of the store environment 100 the topography of the store environment 100 is known, specifically, as will be used below, it is known where the floor 150 of the store environment 100 is located in the coordinate system of the store environment 100.

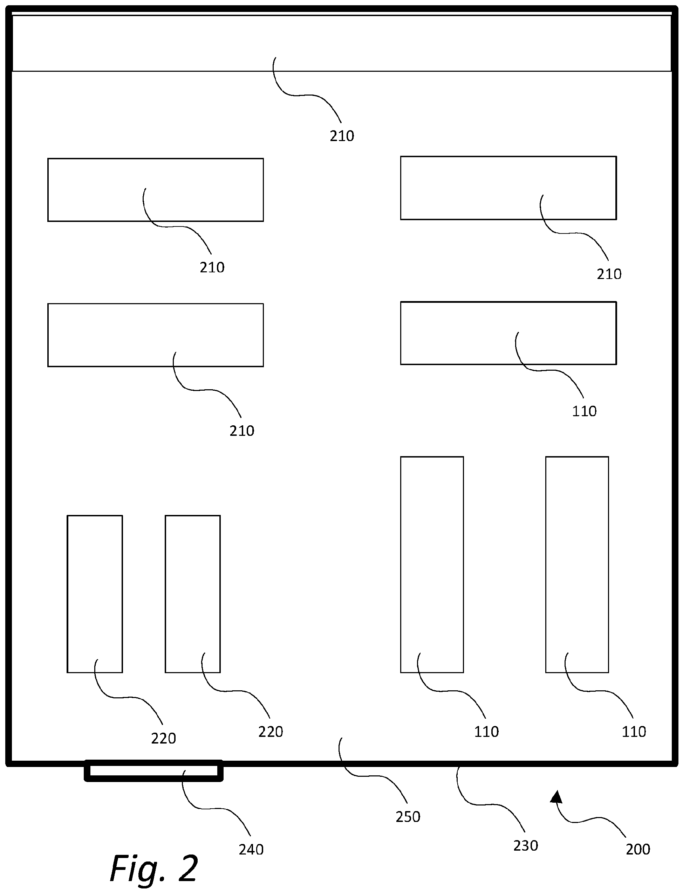

In Fig. 2 a virtual representation 200 of the store environment 100, i.e. a virtual representation 200 of a real space store environment 100 is illustrated. The virtual representation 200 may represent a partly virtual world, such as an augmented reality, AR, world. The virtual representation 200 may represent a fully virtual world, such as a virtual reality, VR, world. One or more of the different structures 110, 120, 130, 140, 150 of the store environment 100 are included in the virtual representation 200 of the store environment 100 as virtual structures 210, 220, 230, 240, 250. Especially, virtual structures 210 representing the structures 110 for exposing products are included in the virtual representation 200 of the store environment 100. The virtual structures 210 in the virtual representation 200 representing the structures 110 for exposing goods are typically represented as planograms. Different positions within the planogram is representing locations for different types of products on the structure 110 for exposing goods in the store environment 100.

The virtual representation 200 is a 3D representation. However, in order to simplify of the figures, both the store environment 100 in Fig.1 and the virtual representation 200 in Fig. 2 are illustrated in 2D. The respective location of the of the virtual structures 210, 220, 230, 240 in the virtual representation 200 correspond to respective known locations of the structures 110, 120, 130, 140, 150 in the coordinate system of the store environment 100.

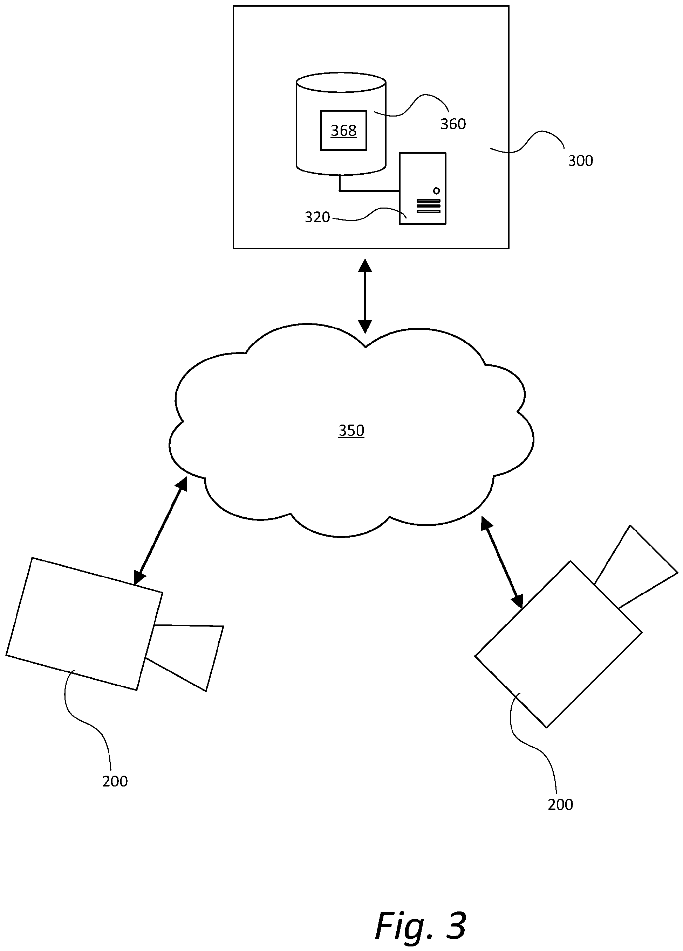

The virtual representation 200 of the store environment 100 is typically stored in a local server 300 at the store. However, the virtual representation 200 of the store environment 100 may as well be stored in a more general server, e.g. on a cloud server. An example of a system comprising a local server 300 and the one or more cameras 200 in the store environment 100 is illustrated in connection with Fig. 3. The cameras 200 and the local server 300 are configured to communicate over a network 350. The virtual representation 200 of the store environment 100 may be comprised in a virtual space layer 368 stored at memory 360 of the server 300. The virtual space layer 368 is a place where information about the virtual representation 200 of the real world is stored. The virtual space layer 368 comprises information about the virtual structures 210, 220, 230, 240, 250. Information about the virtual structures 210, 220, 230, 240, 250 in the virtual space layer 368 may be edited. That is, new virtual structures may be added, one or more of the virtual structures may be moved and/or, one or more virtual structures may be deleted. This in order to reflect rearrangements in the real space store environment 100. Particularly, the virtual space layer 368 comprises information pertaining to the virtual structures 210 in the virtual representation 200 representing the structures 110 for exposing goods. Typically, the virtual structures 210 in the virtual representation 200 representing the structures 110 for exposing goods are represented as planograms. Different positions within the planogram is representing locations for different types of products on the structure 110 for exposing goods in the store environment 100.

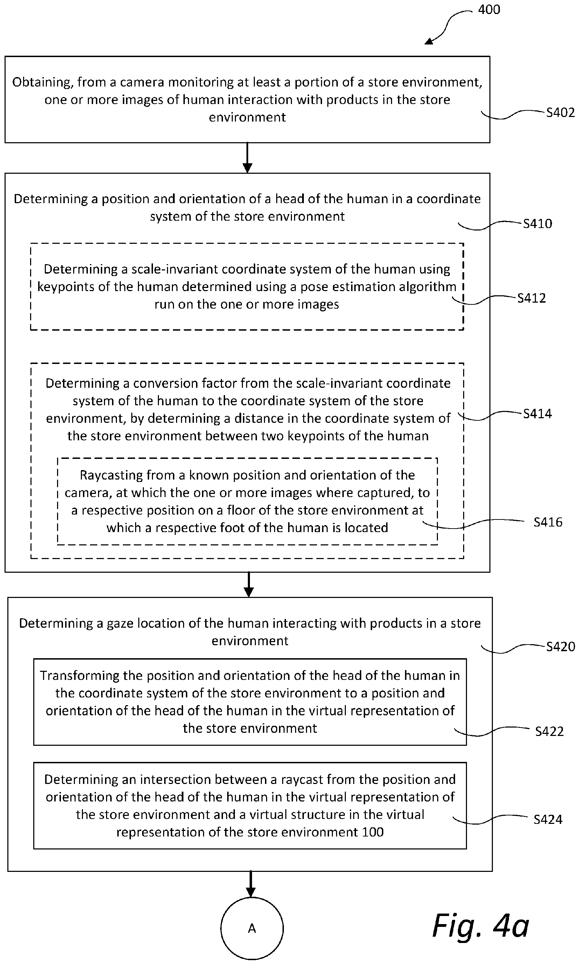

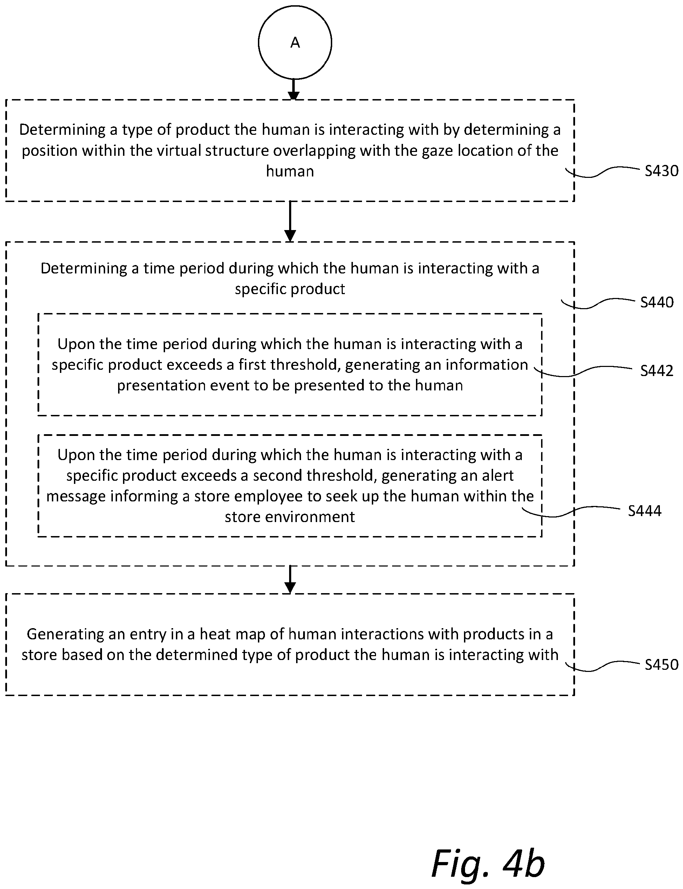

A method 400 for determining a gaze location of a human interacting with products in the store environment 100 will now be described with reference to Figs 4a and 4b. The products are being exposed on the structures 110 for exposing goods in the store environment 100. The steps of the method 400 are computer implemented, i.e. being executed by a processing circuit of an electronic device, e.g. the local server 300 or any other electronic device having processing capabilities. Some steps of the method may be performed at one electronic device and other steps of the method may be performed at another electronic device. All steps of the method may be performed on one and the same electronic device, e.g. the local server 300. For example, instructions for implementing the method 400 may be stored at the memory 360 of the local server 300 and a processing circuitry 320 of the local server 300 may be configured to execute such instructions. According to another example, instructions for implementing the method 400 may be stores at a non-transitory computer-readable storage medium. An example of the store environment 100 and a virtual representation 200 of the store environment 100 is illustrated and discussed above in connection with Figs 1 and 2. Fig. 4 is a flow chart illustrating the steps of the method 400. Below, the different steps are described in more detail. Even though illustrated in a specific order, the steps of the method 400 may be performed in any suitable order, in parallel, as well as multiple times.

The method 400 comprises, obtaining S402, from a camera 200 monitoring at least a portion of the store environment 100, one or more images of human interaction with products in the store environment 100. The obtained one or more images may depict the human from behind or from the side in a manner so that eye features of the human are not present in the one or more images. As will be discussed in more detail below, even from this type of image data the present method 400 is able to determine the gaze location of a human interacting with products in the store environment 100.

As mentioned above, the camera 200 has a known position and orientation within a coordinate system of the store environment 100. The known position of the camera 200 within the coordinate system of the store environment 100 may be obtained as part of a commissioning the camera 200 within the store environment 100. During the commissioning the location of the camera within the coordinate system of the store environments 100 may be determined and saved. The orientation of the camera 200 within the coordinate system of the store environment 100 may be determined at the moment of capturing the one or more images. At the moment of capturing the one or more images by the camera 200, the orientation of the camera 200 may be determined from camera intrinsic parameters and/or pan-tilt values of the camera 200 at the moment of the camera 200 is capturing a respective image.

The method further comprises, determining S410 a position and orientation of a head of the human in the coordinate system of the store environment 100. Such determining S404 is made by analyzing the one or more images obtained from the camera 200. Such analyzing may comprise determining S412 a scale-invariant coordinate system of the human using keypoints of the human determined using a pose estimation algorithm run on the one or more images. Examples of pose estimation algorithms that may be used are OpenPose, PoseNet, or MediaPipe. From such pose estimation algorithms keypoints of the human in the form of top of the head, nose, left eye, right eye, left ear, right ear, left shoulder, right shoulder, left elbow, right elbow, left wrist, right wrist, left hip, right hip, left knee, right knee, left ankle, right ankle, left heal, right heal. The scale-invariant coordinate system of a human is a representation method that normalizes the size of the human body, making the coordinate system independent of the person's physical size or distance from the camera. This allows for consistent comparison and analysis of human poses across different scales and viewing conditions. Further, a conversion factor from the scale-invariant coordinate system of the human to the coordinate system of the store environment 100 may be determined S414. This by determining a distance in the coordinate system of the store environment 100 between two keypoints of the human. Preferably, the two keypoints of the human used for determining the conversion factor are related to the feet (typically the heels) of the human. Hence, a distance in the coordinate system of the store environment 100 between two keypoints of the human may be determined by determining a respective position of each respective foot of the human by raycasting S416 from the known position and orientation of the camera 200, at which the one or more images where captured, to a respective position on the floor 150 of the store environment 100 at which a respective foot of the human is located. By such raycasting S6416 positions of the feet of the human within the coordinate system of the store environment 100 may be determined with good accuracy. How to perform raycasting is discussed in more detail below, reference is made to that discussion. Knowing a distance between the feet of the human in coordinate system of the store environment 100 will give a conversion factor from the scale-invariant coordinate system of the human to the coordinate system of the store environment 100. By doing such conversion the position of the head of the human in the coordinate system of the store environment 100 may be determined. Further, from the key features of the human the orientation of the head of the human in the coordinate system of the store environment 100 may also be determined. Hence, the present method 400 does not need to determine keypoints in the form of the left and right eyes in order to function. Instead, the present method 400 rely on determining a pose, including a number of keypoints, of the human and determining a conversion factor from scale-invariant coordinate system of the human to the coordinate system of the store environment 100.

The method 400 further comprises determining S420 the gaze location of the human. This is made by transforming S422 the position and orientation of the head of the human in the coordinate system of the store environment 100 to a position and orientation of the head of the human in the virtual representation 200 of the store environment 100. Thereafter, an intersection between a raycast from the position and orientation of the head of the human in the virtual representation 200 of the store environment 100 and a virtual structure 210 in the virtual representation 200 of the store environment 100 is determined S424. The gaze location of the human is then determined to be at the determined intersection. Typically, the virtual structure 210 in the virtual representation 200 of the store environment 100 is a planogram representing a structure 110 for exposing goods in the store environment 100.

Raycasting is a technique used in computer graphics and computer vision to simulate the behavior of rays of light as they interact with objects. Raycasting is commonly employed in rendering, collision detection, and other applications. Imagine you have a viewpoint in a 3D space, and you want to determine what objects are visible from that viewpoint. Raycasting involves casting rays from the viewpoint into the scene to check for intersections with structures. The process starts with defining a ray, which is essentially a straight line with an origin (starting point) and a direction. In the present disclosure the origin may be a camera capturing image data and or eyes of a human looking at products in the store. The ray is cast into the scene, and its path is traced until it intersects with a plane. When a ray is cast, the raycasting algorithm checks for intersections with structures in the coordinate system in which the raycasting is performed. In other words, if the position and orientation of the viewpoint/origin is known (as in this case), and the intrinsics of the viewpoint/origin from which the rays are cast is known (as in this case), then it is possible to raycast. The raycast is to be performed by shooting a ray from the position and orientation of the viewpoint/origin outwards in a direction towards an object in the scene. That ray will then, in the present method, at some point intersect with a structure, typically a plane.

Different positions within the planogram may represent locations for different types of products on the structure 110 for exposing goods in the store environment 100. For example, on a structure 110 for exposing pasta, different types of pasta are located at different locations of the structure 110 for exposing pasta, and i.e. different positions within the planogram representing the structure 110 for exposing pasta will represent locations for different types of pasta. According to another example, on a structure 110 for exposing dairy products, different types of dairy products are located at different locations of the structure 110 for exposing dairy products, and i.e. different positions within the planogram representing the structure 110 for exposing dairy products will represent locations for different types of dairy products. Using the above information, the method 400 may further comprise, determining S430 a type of product the human is interacting with by determining a position within the planogram overlapping with the gaze location of the human.

The method 400 may further comprise determining S440 a time period during which the human is interacting with a specific product. Such time period during which the human is interacting with a specific product may be determined by analyzing a sequence of images, e.g. in the form of a video sequence.

Upon the time period during which the human is interacting with a specific product exceeds a first threshold, the method may comprise generating S442 an information presentation event to be presented to the human. The first threshold may be set to be 10 seconds. However, it is realized that the first threshold may be set different values. The information presentation event may be an audio message and/or a message presented on an e-ink display attributed with the specific product. Such a message may be a special offer for purchasing the specific product.

Upon the time period during which the human is interacting with a specific product exceeds a second threshold, the method may comprise generating S444 an alert message informing a store employee to seek up the human within the store environment. The alert message may comprise a location of the human within the coordinate system of the store environment 100. The location of the human within the coordinate system of the store environment may be based on the position of the head of the human within the coordinate system of the store environment 100. The second threshold may be set to be 20 seconds. However, it is realized that the second threshold may be set to different values.

The method may further comprise generating S450 an entry in a heat map of human interactions with products in a store based on the determined type of product the human is interacting with. By determining a time period during which the human is interacting with the type of product, the entry in the heat map may also be based on the time period during which the human is interacting with the type of product. As mentioned above, such time period during which the human is interacting with a specific product may be determined by analyzing a sequence of images, e.g. in the form of a video sequence. The method may be repeated such that further entries in the heat map of human interactions with products in a store is generated.

The person skilled in the art realizes that the present invention by no means is limited to what is explicitly described above. On the contrary, many modifications and variations are possible within the scope of the appended claims.

For example, the method 400 may further comprise privacy masking facial features of the human in the obtained one or more images. Doing so will ensure privacy for the persons moving around in the store environment 100.

Additionally, variations can be understood and effected by the skilled person in practicing the claimed invention, from a study of the drawings, the disclosure, and the appended claims.

## Claims

1. A computer implemented method for determining a gaze location of a human interacting with products in a store environment (100), the method comprising:
obtaining (S402), from a camera (200) monitoring at least a portion of the store environment (100), one or more images of human interaction with products in the store environment (100), the camera (200) having a known position and orientation within a coordinate system of the store environment (100);
determining (S410) a position and orientation of a head of the human in the coordinate system of the store environment (100) by analyzing the one or more images; and
determining (S420) the gaze location of the human as an intersection between a raycast from a position and orientation of the head of the human in a virtual representation (200) of the store environment (100) corresponding to the position and orientation of the head of the human in the coordinate system of the store environment (100) and a virtual structure (210) in the virtual representation (200) of the store environment (100).

2. The method according to claim 1, wherein the virtual structure (210) in the virtual representation (200) of the store environment (100) is a planogram representing a structure (110) for exposing goods in the store environment (100).

3. The method according to claim 2, wherein different positions within the planogram is representing locations for different types of products on the structure (110) for exposing goods in the store environment (100), wherein the method further comprises determining (S430) a type of product the human is interacting with by determining a position within the planogram overlapping with the gaze location of the human.

4. The method according to any one of claims 1-3, further comprising privacy masking facial features of the human in the obtained one or more images.

5. The method according to any one of claims 1-4, wherein the obtained one or more images is depicting the human from behind or from the side in a manner so that eye features of the human are not present in the one or more images.

6. The method according to any one of claims 1-5, wherein analyzing the one or more images in order to determine the position and orientation of the head of the human in the coordinate system of the store comprises:
determining (S412) a scale-invariant coordinate system of the human using keypoints of the human determined using a pose estimation algorithm run on the one or more images,
determining (S414) a conversion factor from the scale-invariant coordinate system of the human to the coordinate system of the store environment (100) by determining a distance in the coordinate system of the store environment (100) between two keypoints of the human.

7. The method according to claim 6, wherein determining a distance in the coordinate system of the store environment (100) between two keypoints of the human comprises:
determining a respective position in the coordinate system of the store environment (100) for each of the feet of the human by raycasting (S416) from the known position and orientation of the camera (200) to a respective position on a floor (150) of the store environment (100) at which a respective foot of the human is located.

8. The method according to any one of claims 1-7, further comprising determining (S440) a time period during which the human is interacting with a specific product.

9. The method according to claim 8, further comprising, upon the time period during which the human is interacting with a specific product exceeds a first threshold, generating (S442) an information presentation event to be presented to the human.

10. The method according to claim 8 or 9, further comprising, upon the time period during which the human is interacting with a specific product exceeds a second threshold, generating (S444) an alert message informing a store employee to seek up the human within the store environment (100), wherein the alert message comprises a location of the human within the coordinate system of the store environment (100).

11. The method according to any one of claims 3-10, further comprising generating (S450) an entry in a heat map of human interactions with products in a store based on the determined type of product the human is interacting with.

12. The method according to claim 11, further comprising determining a time period during which the human is interacting with the type of product, wherein the entry in the heat map is also based on the time period during which the human is interacting with the type of product.

13. The method according to claim 11 or 12, further comprising repeating the method such that further entries in the heat map of human interactions with products in a store is generated.

14. A non-transitory computer-readable storage medium having stored thereon instructions for implementing the method according to any one of claims 1-13, when executed on a device having processing capabilities.

15. A local server (400) comprising:
a memory (360) having stored thereon instructions for implementing the method according to any one of claims 1-13; and
a processing circuitry (320) configured to execute the instructions.
